# EUROPEAN PATENT APPLICATION

(11) **EP 2 610 709 A1**
(43) Date of publication of application: **03.07.2013**
(21) Application number: 12196747.5
(22) Date of filing: 12.12.2012
(51) Int. Cl.: G06F 3/01, B60K 37/06, G06F 3/0481, G06F 3/0354

(54) **Operation input system**

(30) Priority: 27.12.2011 JP 2011286493
(71) Applicant: AISIN AW CO., LTD., Anjo-shi, Aichi 444-1192 (JP)
(72) Inventor: Matsuoka, Masatoshi, Anjo-shi, Aichi 444-1192 (JP); Koyama, Ryoji, Anjo-shi,, Aichi 444-1192 (JP); Tanaka, Saijiro, Anjo-shi,, Aichi 444-1192 (JP)
(74) Representative: TBK

(57) **Abstract**

An operation input system comprising: a touch pad having an operation surface and sensing an object in contact with or in proximity to the operation surface to receive input corresponding to a position of the object; a protrusion member protruding from the operation surface; a protrusion control section controlling a position of the protrusion member with respect to the operation surface in a protrusion direction; a display device displaying an image on a display screen; and a depiction control section controlling depiction of the image to be displayed on the display screen. The protrusion control section correlates coordinates of the display screen and coordinates of the operation surface with each other. In case that a particular operation figure is displayed on the display screen, the protrusion control section brings the protrusion member positioned at coordinates on the operation surface corresponding to coordinates of the particular operation figure into a protruded state. The depiction control section displays a protrusion-time image indicating that the protrusion member is brought into the protruded state.

## Description

### BACKGROUND OF THE INVENTION

The present invention relates to an operation input system including a touch pad serving as a pointing device.

### Description of the Related Art

Devices including an operation input system as standard equipment are utilized in laptop personal computers etc., for example. The operation input system includes a touch pad serving as a pointing device. A user performs a slide operation using a fingertip, the tip of a stylus pen, or the like on an operation surface provided on a surface of the touch pad to move an operation cursor displayed on a display screen communicably connected to the touch pad. In addition, the user performs a predetermined operation on the operation surface with the operation cursor displayed on the display screen located over an operation figure (such as an operation icon, for example) to achieve a function associated with the operation figure. The thus configured operation input system including the touch pad may be utilized to perform predetermined operation input to an in-vehicle terminal device (hereinafter occasionally referred to as "navigation apparatus") in a navigation system.

The navigation apparatus is often operated by a driver of a vehicle. In such a case, the user (a driver of the vehicle) operates the navigation apparatus in between driving. Therefore, it is difficult to perform an operation while closely watching the display screen, and a desired operation may not be performed accurately. In view of this point, there is proposed an operation input system that allows to perform operation input utilizing tactile sensation (a tactile feel) without closely watching a display screen. For example, Japanese Patent Application Publication No. 2006-268068 (JP 2006-268068 A) discloses a technology by which the entirety of an operation surface is covered with fiber hair and fiber hair provided at a position on the operation surface corresponding to the position of an operation figure displayed on a display device is caused to stand up. In the system according to JP 2006-268068 A, however, the entirety of the operation surface is covered with fiber hair. Thus, there remains an ambiguity in discrimination through tactile sensation between standing fiber hair standing and non-standing fiber hair.

### SUMMARY OF THE INVENTION

In view of the foregoing, it is an object of the invention to provide an operation input system that enables to perform reliable operation input compared to the related art without closely watching a display screen, and that enables to perform operation input in a highly convenient manner.
This object is achieved by an operation input system according to claim 1 or 2. Advantageous further developments are as set forth in the dependent claims.

According to an aspect of the present invention, there is provided an operation input system including: a touch pad that includes an operation plate, on a surface of which an operation surface is formed, and senses an object to be sensed in contact with or in proximity to the operation surface to receive input corresponding to a position of the sensed object; a protrusion member, a distal end portion of which can penetrate through the operation plate to protrude from the operation surface; a protrusion control section that controls a position of the protrusion member with respect to the operation surface in a protrusion direction; a display device that includes a display screen and displays an image on the display screen; and a depiction control section that controls depiction of the image to be displayed on the display screen, in which: the protrusion control section correlates coordinates of the display screen and coordinates of the operation surface with each other, and in the case where a particular operation figure, which is a particular one of a plurality of types of operation figures, is displayed on the display screen, the protrusion control section brings the protrusion member positioned at coordinates on the operation surface corresponding to coordinates of the particular operation figure into a protruded state in which the protrusion member protrudes from the operation surface; and the depiction control section displays an image of the particular operation figure corresponding to the protrusion member brought into the protruded state as a protrusion-time image indicating that the protrusion member is brought into the protruded state.

According to the aspect, a predetermined operation can be input to another device communicably connected to the operation input system in accordance with the position of the object to be sensed in contact with or in proximity to the operation surface of the touch pad. The protrusion member can penetrate through the operation plate on the surface of the touch pad to protrude from the operation surface, and the protrusion control section controls the position of the protrusion member in the protrusion direction. This allows the protrusion member to be advanced and retracted so as to be moved between the protruded state in which the distal end portion of the protrusion member protrudes to the surface side with respect to the operation surface and a state (non-protruded state) in which the distal end portion of the protrusion member is flush with the operation surface or retracted to the back surface side with respect to the operation surface. When the protrusion member is in the non-protruded state, a portion of the operation surface around the protrusion member is flat. When the protrusion member is in the protruded state, in contrast, the distal end portion of the protrusion member is distinctly protruded from the operation surface so as to be directly recognizable by a user through tactile sensation using a fingertip or the like. Thus, the protrusion control section correlates coordinates of the display screen and coordinates of the operation surface with each other, and brings the protrusion member positioned at coordinates on the operation surface corresponding to coordinates of an operation figure displayed on the display screen into the protruded state. This allows the user to easily associate the position of the operation figure on the display screen and the position of the protrusion member in the protruded state on the operation surface recognized through tactile sensation, and to easily select the desired operation figure. Thus, it is possible to provide an operation input system that enables to perform reliable operation input compared to the related art without closely watching a display screen.
The protrusion control section brings only the protrusion member corresponding to the particular operation figure, among the plurality of types of operation figures displayed on the display screen, into the protruded state. Hence, even in the case where a plurality of types of operation figures are displayed on the display screen, it is possible to avoid complication with the number of protrusion members brought into the protruded state being increased more than necessary. In addition, the depiction control section displays an image of the particular operation figure corresponding to the protrusion member brought into the protruded state as the protrusion-time image. Hence, it is possible to distinguish between the particular operation figure and the other operation figures on the display screen on the basis of whether or not each operation figure is displayed as the protrusion-time image. That is, it is possible to intuitively distinguish between the particular operation figure and the other operation figures at a glance without closely watching the display screen. Thus, the user can perform operation input in a highly convenient manner.

According to another aspect of the present invention, there is provided an operation input system including: a touch pad that includes an operation plate, on a surface of which an operation surface is formed, and senses an object to be sensed in contact with or in proximity to the operation surface to receive input corresponding to a position of the sensed object; a plurality of protrusion members, distal end portions of which can penetrate through the operation plate to protrude from the operation surface; a protrusion control section that controls positions of the protrusion members with respect to the operation surface in a protrusion direction; a display device that includes a display screen and displays an image on the display screen; and a depiction control section that controls depiction of the image to be displayed on the display screen, in which: in the case where a plurality of particular operation figures, which are particular ones of a plurality of types of operation figures, are displayed on the display screen, the protrusion control section brings the protrusion members matching positional relationship between the particular operation figures on the display screen into a protruded state in which the protrusion member protrudes from the operation surface; and the depiction control section displays images of the particular operation figures corresponding to the protrusion members brought into the protruded state as a protrusion-time image indicating that the protrusion member is brought into the protruded state.

According to the above aspect, a predetermined operation can be input to another device communicably connected to the operation input system in accordance with the position of the object to be sensed in contact with or in proximity to the operation surface of the touch pad. The plurality of protrusion members can penetrate through the operation plate on the surface of the touch pad to protrude from the operation surface, and the protrusion control section controls the position of the protrusion members in the protrusion direction. This allows the protrusion members to be advanced and retracted so as to be moved between the protruded state in which the distal end portion of the protrusion member protrudes to the surface side with respect to the operation surface and a non-protruded state in which the distal end portion of the protrusion member is flush with the operation surface or retracted to the back surface side with respect to the operation surface. When the protrusion member is in the non-protruded state, a portion of the operation surface around the protrusion member is flat. When the protrusion member is in the protruded state, in contrast, the distal end portion of the protrusion member is distinctly protruded from the operation surface so as to be directly recognizable by a user through tactile sensation using a fingertip or the like. Thus, in the case where a plurality of particular operation figures are displayed on the display screen, the protrusion control section brings a plurality of protrusion members into a state in which the protrusion member protrudes from the operation surface so as to establish positional relationship corresponding to the mutual positional relationship between the coordinates of the plurality of operation figures. This allows the user to easily associate the mutual positional relationship between the plurality of operation figures on the display screen with the mutual positional relationship between the plurality of protrusion members in the protruded state recognized through tactile sensation, and to easily select the desired operation figure. Thus, it is possible to provide an operation input system that enables to perform reliable operation input compared to the related art without closely watching a display screen.
The protrusion control section brings only the protrusion members corresponding to the particular operation figures, among the plurality of types of operation figures displayed on the display screen, into the protruded state. Hence, even in the case where a plurality of types of operation figures are displayed on the display screen, it is possible to avoid complication with the number of protrusion members brought into the protruded state being increased more than necessary. In addition, the depiction control section displays images of the particular operation figures corresponding to the protrusion members brought into the protruded state as the protrusion-time image. Hence, it is possible to distinguish between the particular operation figures and the other operation figures on the display screen on the basis of whether or not each operation figure is displayed as the protrusion-time image. That is, it is possible to intuitively distinguish between the particular operation figures and the other operation figures at a glance without closely watching the display screen. Thus, the user can perform operation input in a highly convenient manner.

The depiction control section may display, as images of non-particular operation figures which are operation figures among the plurality of types of operation figures other than the particular operation figures, the same image irrespective of whether or not the protrusion members are brought into the protruded state.

According to the configuration, the non-particular operation figures are displayed on the display screen as the same image at all times. Hence, it is possible to clearly distinguish between the particular operation figures and the non-particular operation figures on the display screen by making the image at all times different from the protrusion-time image.

The plurality of types of operation figures may be associated with respective predetermined functions; and the operation input system may further include a particular operation figure determination section that determines the operation figures associated with a function accomplished through a single select operation as the particular operation figures.

Some of the functions associated with the operation figures are not accomplished before a plurality of select operations are performed sequentially, and others of the functions are accomplished through only a single select operation. In the situation where the user performs operation input without closely watching the display screen (such as a scene where the user performs operation input to a navigation system in between driving, for example), it is considered to be more probable that an operation is to be performed on operation figures associated with the latter functions than on operation figures associated with the former functions. According to the configuration, in view of this point, the effectiveness of operation input performed in a highly convenient manner can be secured also in consideration of the probability that an operation is to be performed on each operation figure when operation input is performed without closely watching the display screen.

The protrusion-time image may be a symbol-added image obtained by adding a predetermined identification symbol image to a normal-time image that is an image of the operation figure for an occasion on which the protrusion member is in a retracted state; and the depiction control section may display the normal-time image for each of the particular operation figures and the identification symbol image provided adjacent to the normal-time image, or displays the symbol-added image stored in advance in substitution for the normal-time image for each of the particular operation figures.

According to the configuration, the particular operation figures are represented by the symbol-added image (one type of the protrusion-time image) obtained by adding the predetermined identification symbol image to the normal-time image. Hence, it is possible to clearly distinguish between the particular operation figures and the other operation figures on the display screen on the basis of whether or not the identification symbol image is included in the image of each operation figure.
According to the configuration, in addition, the particular operation figures can be appropriately represented by the symbol-added image serving as the protrusion-time image by displaying the normal-time image and the identification symbol image provided adjacent to the normal-time image. Alternatively, the particular operation figures can be appropriately represented by the symbol-added image serving as the protrusion-time image by displaying the symbol-added image in substitution for the normal-time image.

The identification symbol image may have a design corresponding to an arrangement pattern on the operation surface of one or more of the protrusion members to be brought into the protruded state in correspondence with one of the particular operation figures.

According to the configuration, the arrangement pattern on the operation surface of one or more of the protrusion members to be brought into the protruded state in correspondence with one of the particular operation figures can be intuitively recognized on the basis of the design of the identification symbol image. Hence, convenience to the user can be further improved.

### BRIEF DESCRIPTION OF THE DRAWINGS

FIG. 1 is a schematic view showing an operation input system as mounted on a vehicle;
FIG. 2 is a block diagram showing a schematic configuration of a navigation apparatus;
FIG. 3 is a block diagram showing a schematic configuration of the operation input system;
FIG. 4 is a perspective view of a touch pad provided in an operation input device;
FIG. 5 is a sectional view showing the configuration of a drive mechanism;
FIG. 6 shows an example of operation input performed utilizing the operation input system;
FIG. 7 shows an example of operation input performed utilizing the operation input system;
FIG. 8 shows an example of operation input performed utilizing the operation input system;
FIG. 9 is a schematic diagram showing a form of control for depiction of images of particular operation figures;
FIG. 10 is a flowchart showing the overall process procedures of an operation input reception process;
FIG. 11 is a flowchart showing the process procedures of a particular operation figure determination process;
FIG. 12 is a flowchart showing the process procedures of an image display process;
FIG. 13 is a flowchart showing the process procedures of a protrusion control process;
FIG. 14 is a flowchart showing the process procedures of an input determination process;
FIG. 15 is a schematic diagram showing a form of control for depiction of images of particular operation figures; and
FIG. 16 is a schematic diagram showing a form of control for depiction of images of particular operation figures.

### DETAILED DESCRIPTION OF THE EMBODIMENTS

A navigation apparatus has many functions that can be executed, and accordingly there may be many types of operation figures to be displayed on a display device. At each time point, a plurality of operation figures associated with functions that are being executed or functions that can be executed are displayed on the display screen. At this time, all of the types of operation figures being displayed are not to be operated at approximately equal probabilities, for example, and one or more particular operation figures, among all the types of operation figures, may be operated at higher probabilities depending on the situation. In such a case, treating all the operation figures to be displayed on the display device in the same manner to give different tactile feels to regions on the operation surface corresponding to such operation figures may unnecessarily increase the number of regions with a different tactile feel, and may rather make it difficult to perform operation input. From the viewpoint of convenience to the user, it may be preferable that only regions on the operation surface corresponding to the particular operation figures should be given a different tactile feel. In such a case, in addition, it is preferable that the particular operation figures and the other operation figures can also be distinguished from each other on the display screen. The operation input system according to the related art leaves room for improvement in this point.

An operation input system according to an embodiment of the present invention will be described with reference to the drawings. In the embodiment, an operation input system 3 configured to perform (predetermined) operation input prescribed in advance to a navigation system (in the example, an in-vehicle navigation apparatus 1) is described. The operation input system 3 includes a display input device 40 and an operation input device 4 communicably connected to the navigation apparatus 1. In the following, a schematic configuration of the navigation apparatus 1, a schematic configuration of the operation input device 4, the configuration of the operation input system 3, and the procedures of an operation input reception process will be described sequentially in this order.

### 1. Schematic Configuration of Navigation Apparatus

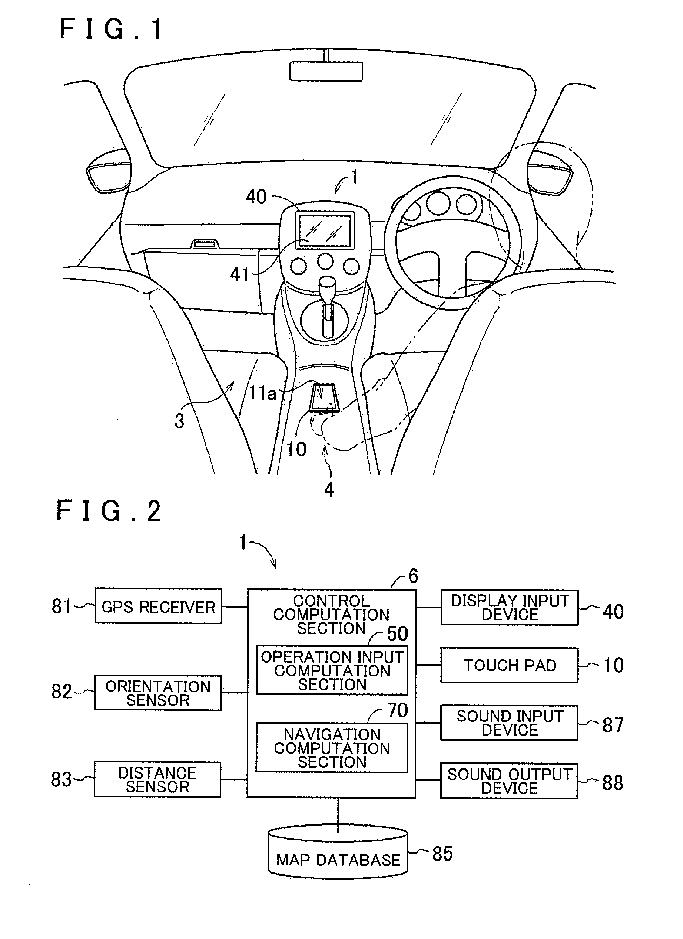

A schematic configuration of the navigation apparatus 1 will be described with reference to FIGS. 1 and 2. The navigation apparatus 1 is configured to achieve basic functions such as displaying the vehicle position, searching for a route from a departure place to a destination, providing route guidance, and searching for a destination. To this end, the navigation apparatus 1 includes a control computation section 6 as shown in FIG. 2. The control computation section 6 includes an arithmetic processing unit such as a CPU as its core member, and may be implemented by hardware, software, or a combination of both as a functional section configured to perform various processes on input data. The control computation section 6 includes a navigation computation section 70. In addition, the control computation section 6 is communicably connected to a GPS receiver 81, an orientation sensor 82, a distance sensor 83, a map database 85, the display input device 40, the touch pad 10, a sound input device 87, and a sound output device 88.

The GPS receiver 81 receives GPS signals from Global Positioning System (GPS) satellites. The orientation sensor 82 detects the orientation of travel of the vehicle or variations in orientation of travel of the vehicle. The distance sensor 83 detects the vehicle speed and the travel distance of the vehicle. As well known, the navigation computation section 70 can derive an estimated vehicle position on the basis of information obtained from the GPS receiver 81, the orientation sensor 82, and the distance sensor 83, and further on the basis of map matching known in the related art.

The map database 85 stores map data divided for each predetermined partition. The map data include road network data including the connection relationship between a plurality of nodes corresponding to intersections and a plurality of links corresponding to roads connecting between the nodes. Each node has information on its position on the map expressed by the latitude and the longitude. Each link has information such as the road type, the length of the link, and the road width as its attribute information. The map database 85 is referenced by the navigation computation section 70 during execution of processes such as displaying a map, searching for a route, and map matching. The map database 85 is stored in a storage medium such as a hard disk drive, a flash memory, or a DVD-ROM.

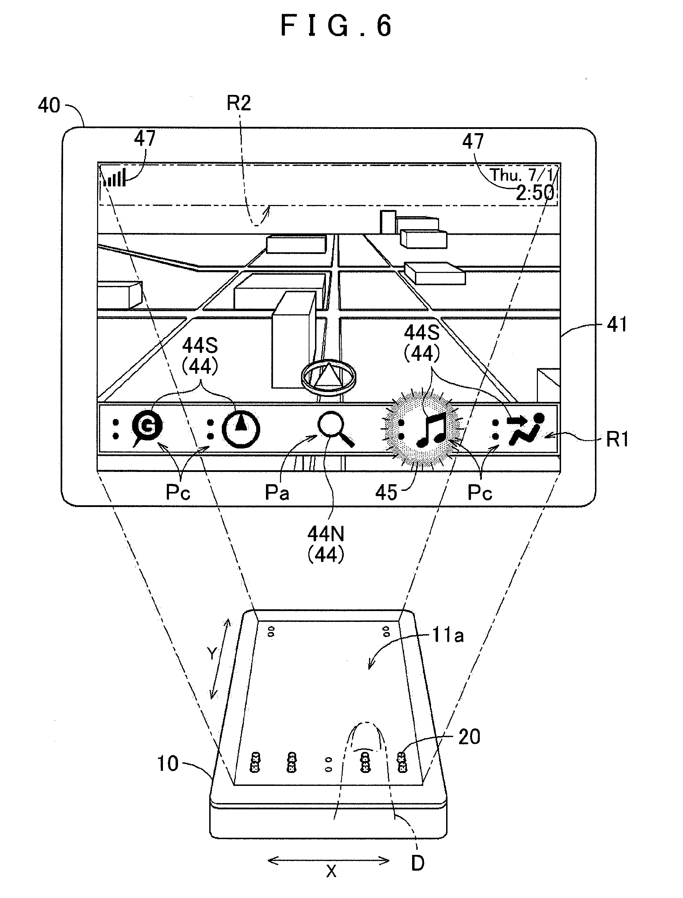

The display input device 40 is formed by integrating a display device such as a liquid crystal display device and an input device such as a touch panel. The display input device 40 includes a display screen 41, and displays on the display screen 41 a map of an area around the vehicle, images such as an operation figure 44 (see FIG. 6) associated with a predetermined function, and so forth, for example. In the embodiment, the display input device 40 corresponds to the "display device" according to the present invention. The operation figure 44 is a figure displayed on the display screen 41 to make it easy for the user (a passenger of the vehicle) to perceive a particular function to be achieved by operating the touch panel or the touch pad 10 to transfer operation input to the navigation apparatus 1. Examples of the operation figure 44 include operation icons, button images, and character key images depicted as illustrations or the like. The display input device 40 senses an object to be sensed in contact with or in proximity to the touch panel to receive input corresponding to the position of the sensed object. For example, the user may bring the object to be sensed such as a fingertip or the tip of a stylus pen in contact with or in proximity to the operation figure 44 displayed on the display screen 41 to select the operation figure 44 and achieve a function associated with the operation figure 44. In addition, the user may bring the object to be sensed in contact with or in proximity to a position other than the operation figure 44 displayed on the display screen 41 to select a location on a map, for example.

As shown in FIG. 1, the touch pad 10 is provided separately from the display input device 40. The touch pad 10 includes an operation surface 11a, and senses an object to be sensed D (see FIG. 6) in contact with or in proximity to the operation surface 11a to receive input corresponding to the position of the sensed object. An operation cursor 45 (see FIG. 6) is displayed on the display screen 41 in correspondence with the position of the object sensed by the touch pad 10 serving as a pointing device. The user slides the object to be sensed D such as a fingertip in contact with or in proximity to the operation surface 11a to move the operation cursor 45 on the display screen 41. Then, the user may perform a predetermined operation on the operation surface 11a with the operation cursor 45 located over the operation figure 44 to select the operation figure 44 and achieve a function associated with the operation figure 44. In addition, the user may perform a predetermined operation on the operation surface 11a with the operation cursor 45 located over a position other than the operation figure 44 displayed on the display screen 41 to select a location on a map, for example.

The display input device 40 is disposed at a position at which the display input device 40 may be seen without the need for the user (in particular, the driver of the vehicle) to significantly change his/her viewing direction during drive so as to be easily seeable by the user. In the example shown in FIG. 1, the display input device 40 is disposed at the center portion of the upper surface of a dashboard. However, the display input device 40 may be disposed in an instrument panel, for example. Meanwhile, the touch pad 10 is disposed at a position close to the hand of the user so as to be easily operable by the user. That is, the touch pad 10 is disposed at a position closer to the hand of the user and farther from the viewing direction than the display input device 40. In the example shown in FIG. 1, the touch pad 10 is disposed at a center console portion. However, the touch pad 10 may be disposed at the center portion of the upper surface of a dashboard, at a spoke portion of a steering wheel, or on a door panel, for example.

The sound input device 87 receives voice input from the user. The sound input device 87 includes a microphone or the like. The navigation computation section 70 may achieve functions such as searching for a destination through voice recognition and making a handsfree call on the basis of voice received through the sound input device 87. The sound output device 88 includes a speaker or the like. The navigation computation section 70 may achieve functions such as providing voice guidance via the sound output device 88.

### 2. Configuration of Operation Input Device

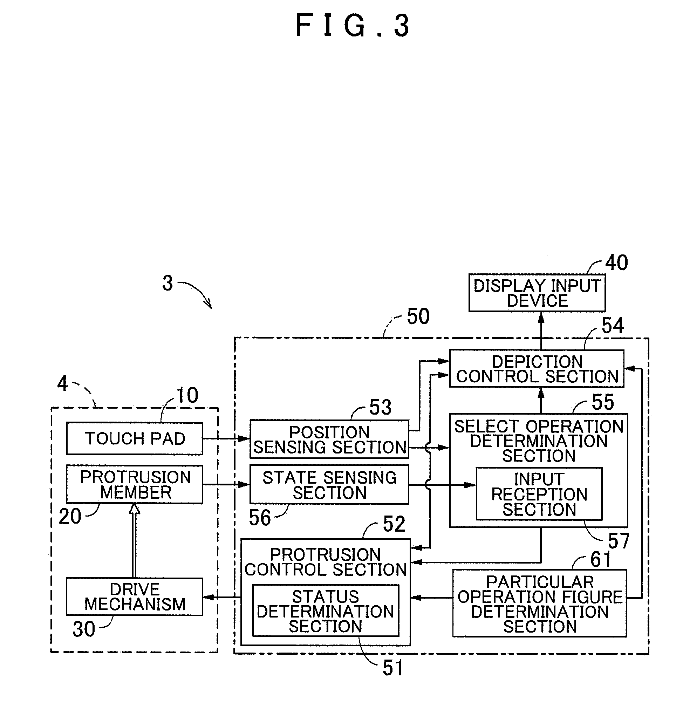

As shown in FIGS. 3 to 5, the operation input device 4 includes the touch pad 10, protrusion members 20, and drive mechanisms 30. The operation input device 4 is schematically configured such that the protrusion members 20 driven by the drive mechanisms 30 can protrude (appear and disappear) from the surface of the touch pad 10.

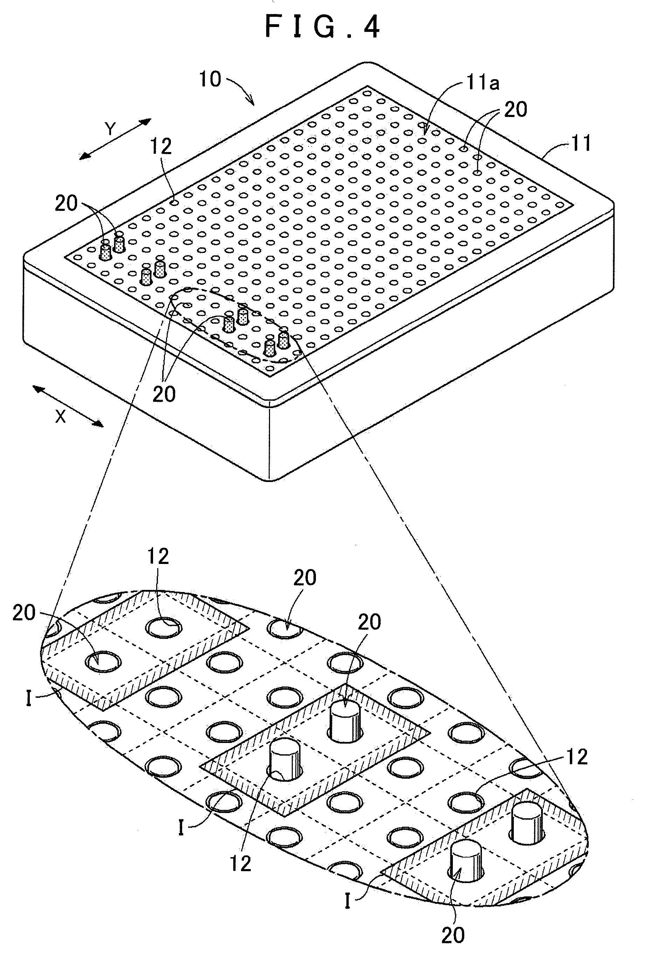

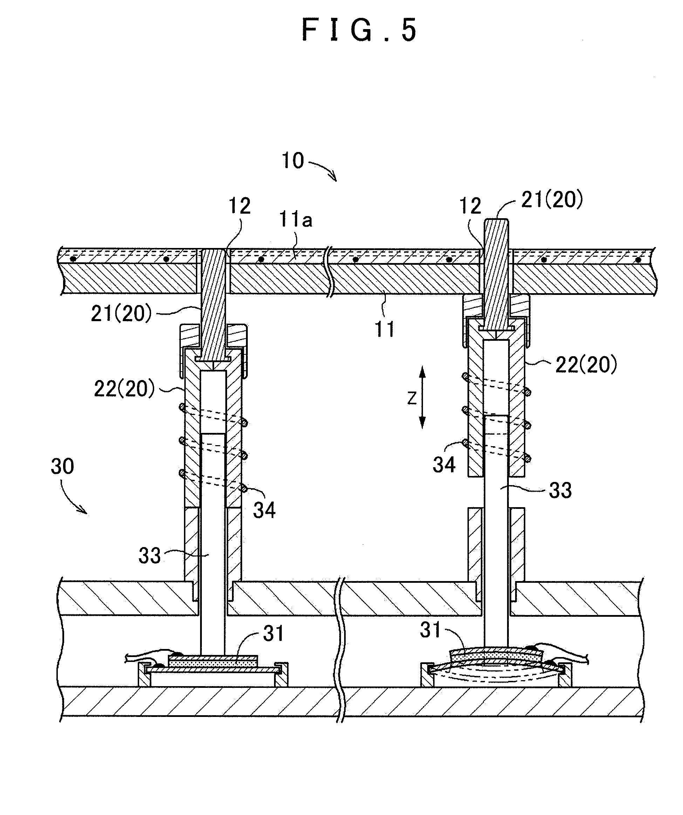

As shown in FIGS. 4 and 5, the touch pad 10 includes an operation plate 11, and the operation surface 11a is formed on the surface of the operation plate 11. The thus configured touch pad 10 may be of a variety of types such as a resistance film type and a capacitance type. In the example, the touch pad 10 is of the capacitance type. A substrate and an electrode layer are provided on the back surface side of the operation surface 11a. The touch pad 10 senses the object to be sensed D such as a fingertip in contact with or in proximity to the operation surface 11a to receive input corresponding to the position of the sensed object.

The operation plate 11 is provided with a hole portion 12 that penetrates through the operation plate 11. In the embodiment, a plurality (in the example, multiplicity) of such hole portions 12 are provided. The plurality of hole portions 12 are arranged in accordance with a predetermined rule along the operation surface 11a. In the example, the plurality of hole portions 12 are arranged regularly at constant intervals in each of the vertical and horizontal directions over the entire operation surface 11a, and arranged in a matrix (orthogonal grid) as a whole. Each of the hole portions 12 is formed to have a circular shape as seen from the surface side of the operation plate 11.

The protrusion member 20 is inserted into each of the hole portions 12. Thus, in the example, a plurality (multiplicity) of protrusion members 20 are also provided. Specifically, the number of the protrusion members 20 is the same as the number of the hole portions 12. In addition, the plurality of protrusion members 20 are arranged in accordance with a predetermined rule along the operation surface 11a. In the example, the plurality of protrusion members 20 are arranged regularly at constant intervals in each of the vertical and horizontal directions over the entire operation surface 11a, and arranged in a matrix as a whole.

As shown in FIG. 5, the protrusion member 20 includes a pin member 21 formed in the shape of an elongated circular column (pin) and a tubular member 22 that is generally cylindrical. The diameter of the pin member 21 is slightly smaller than the diameter of the hole portion 12. The lower end portion of the pin member 21 is retained by the protrusion member 22. In the example, the distal end portion (upper end portion) of the pin member 21 is inserted into each of the hole portions 12. In a reference state (state on the left side of FIG. 5) in which the protrusion member 20 is not driven by the drive mechanism 30, the distal end portion (distal end surface) of the pin member 21 which is formed to be flat is flush with the level of the operation surface 11a.

As shown in FIG. 5, the drive mechanism 30 is provided on the back surface side with respect to the operation plate 11. The drive mechanism 30 is configured to cause advancing/retracting operation of the protrusion member 20 along a direction (referred to as "protrusion direction Z") intersecting (in the example, orthogonally intersecting) the operation surface 11a. The drive mechanism 30 includes a piezoelectric element 31.

The piezoelectric element 31 is a passive element that utilizes a piezoelectric effect, and converts a voltage applied to a piezoelectric body into a force, or converts an external force applied to the piezoelectric body into a voltage. The piezoelectric element 31 is provided to vibrate in the protrusion direction Z. A coupling member 33 is coupled to the piezoelectric element 31 to vibrate together with the piezoelectric element 31. The coupling member 33 is formed in the shape of an elongated circular column (pin). The distal end portion of the coupling member 33 on a side opposite to the side on which the coupling member 33 is coupled to the piezoelectric element 31 is inserted into a space inside the tubular member 22. The outside diameter of the coupling member 33 is substantially equal to the inside diameter of the tubular member 22. The outer peripheral surface of the coupling member 33 and the inner peripheral surface of the tubular member 22 contact each other.

A spring member 34 is provided at a position at which the coupling member 33 and the tubular member 22 contact each other so as to surround the tubular member 22 from the outer peripheral side. The spring member 34 provides an inward preliminary pressure with a predetermined magnitude to cause a predetermined friction force between the coupling member 33 and the tubular member 22 forming the protrusion member 20. The preliminary pressure applied by the spring member 34 is set such that the static friction force between the coupling member 33 and the tubular member 22 is at least larger than a component of a gravitational force acting on the protrusion member 20 in the protrusion direction Z. In addition, the preliminary pressure is set such that the coupling member 33 and the tubular member 22 can slide with respect to each other with a dynamic friction force caused between the coupling member 33 and the tubular member 22 along with vibration of the piezoelectric element 31.

In the embodiment, in addition, the magnitude relationship between the speed of vibration of the piezoelectric element 31 to one side along the protrusion direction Z and the speed of vibration of the piezoelectric element 31 to the other side can be adjusted by a protrusion control section 52 (see FIG. 3) included in an operation input computation section 50 to be discussed later. When the speed of vibration to the protrusion direction side (surface side with respect to the operation surface 11a) is lower than the speed of vibration to the retraction direction side (back surface side with respect to the operation surface 11 a), which is opposite to the protrusion direction side, the protrusion member 20 is moved to the protrusion direction side on the basis of the difference between the static friction and the dynamic friction caused between the coupling member 33 and the tubular member 22. This allows the distal end portion of the protrusion member 20 (pin member 21) to be protruded to the surface side with respect to the operation surface 11a. That is, the protrusion member 20 may be brought into a state (protruded state) in which the distal end portion of the protrusion member 20 penetrates through the operation plate 11 to be protruded to the surface side with respect to the operation surface 11a. The protruded state is a state (first state) in which the distal end portion of the protrusion member 20 is above the operation surface 11a along the protrusion direction Z.

When the speed of vibration to the retraction direction side is lower than the speed of vibration to the protrusion direction side, on the other hand, the protrusion member 20 is moved to the retraction direction side. That is, the protrusion member 20 may be brought into a state (retracted state) in which the distal end portion of the protrusion member 20 is retracted to the back surface side with respect to the operation surface 11a. The "retracted state" includes a state in which the distal end portion of the pin member 21 of the protrusion member 20 is flush with the level of the operation surface 11a. The retracted state is a state (second state or non-protruded state) in which the distal end portion of the protrusion member 20 is at or below the operation surface 11a along the protrusion direction Z.

The plurality of protrusion members 20 can be thus independently moved between the protruded state and the retracted state by the drive mechanism 30. A desired concave-convex shape can be expressed by the multiplicity of protrusion members 20 provided over the entire operation surface 11a so as to freely appear and disappear.

A detailed configuration of the operation input system 3 will be described below. For ease of description, the touch panel 10 with a simplified structure illustrated in FIG. 6 is used. That is, two hole portions 12 and protrusion members 20 are arranged along the Y direction of the operation surface 11a, and a total of seven pairs of such hole portions 12 and protrusion members 20 are provided. In the example of FIG. 6, five of the seven pairs are arranged at equal intervals along the X direction of the operation plate 11a on one side (closer side) in the Y direction, and the remaining two pairs are disposed at both end portions in the X direction on the other side (farther side) in the Y direction.

### 3. Configuration of Operation Input System

As shown in FIG. 3, the operation input system 3 includes the operation input device 4 discussed above, the display input device 40, and the operation input computation section 50 interposed between the operation input device 4 and the display input device 40. In the embodiment, the operation input computation section 50 is incorporated in the control computation section 6 forming the navigation apparatus 1 (see FIG. 2). It should be noted, however, that the present invention is not limited to such a configuration, and that the operation input computation section 50 may be provided independently of the control computation section 6. The operation input device 4 and the display input device 40 are communicably connected to each other via the operation input computation section 50.

The operation input computation section 50 includes a status determination section 51, the protrusion control section 52, a position sensing section 53, a depiction control section 54, a select operation determination section 55, and a particular operation figure determination section 61. In the embodiment, the status determination section 51 is included in the protrusion control section 52. In the embodiment, in addition, the operation input computation section 50 further includes a state sensing section 56 and an input reception section 57. In the embodiment, the input reception section 57 is included in the select operation determination section 55.

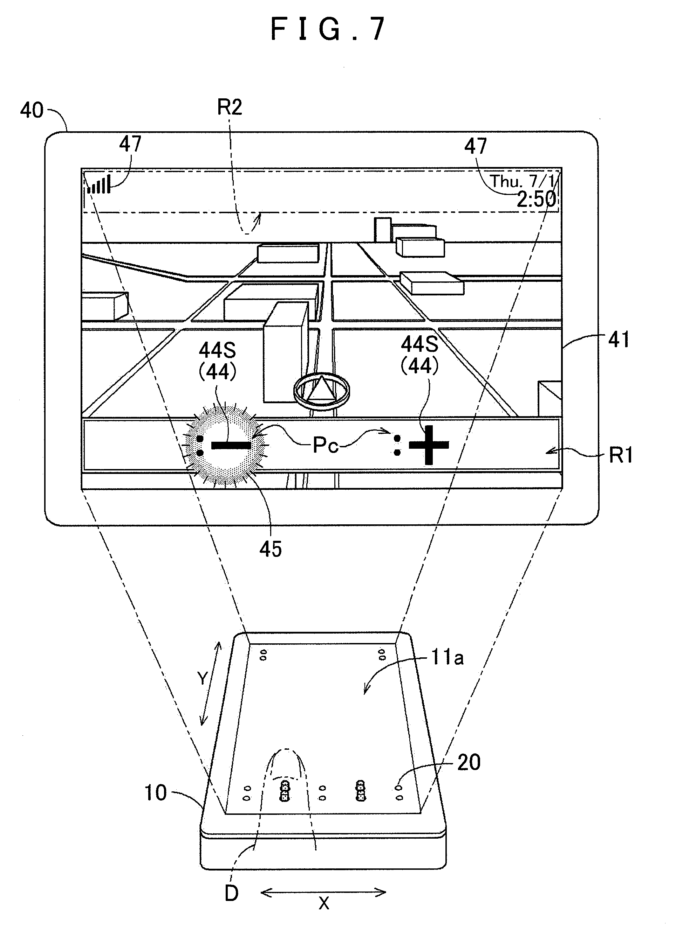

The particular operation figure determination section 61 determines a particular operation figure 44S, which is a particular one of a plurality of types of operation figures 44. As discussed above, the display screen 41 may display an image of the operation figure 44 associated with a predetermined function besides a map image of an area around the vehicle position. In the example shown in FIG. 6, for example, images of five operation figures 44 are displayed side by side in a horizontal row at equal intervals in an operation figure display region R1 set on the lower side on the display screen 41, and superimposed on the map image of the area around the vehicle position. Such operation figures 44 correspond to main functions for operating the navigation apparatus 1 and various accessories of the vehicle. For example, the operation figures 44 are associated with a probe traffic information display function, a vehicle position display function, a destination search function, an audio setting function, and an air conditioner setting function, sequentially in this order from the left. Other examples of the operation figures 44 include a figure associated with a function to change the scale of map display, a figure associated with a function to change the display direction (track up/north up) of map display, a figure associated with a volume change function for an audio device (see FIG. 7), and a figure associated with a set temperature change function for an air conditioner device.

In the embodiment, the various functions associated with the operation figures 44 are classified in accordance with the number of select operations required before the relevant function is accomplished (the target function is completely achieved). In the example, the functions are classified into single-operation accomplishment functions that are accomplished through only a single select operation, and multiple-operation accomplishment functions that require a plurality of select operations before accomplishment. For example, desired information can be displayed immediately by performing only a single select operation on the operation figure 44 associated with each of the probe traffic information display function and the vehicle position display function, among the functions described above. Thus, such functions are classified into the single-operation accomplishment functions. In addition, a desired set value or item can be changed immediately by performing only a single select operation on the operation figure 44 associated with each of the map display scale change function, the map display direction change function, the audio device volume change function, and the air conditioner device set temperature change function. Thus, such functions are classified into the single-operation accomplishment functions.

In the embodiment, functions for establishing a state in which input for the single-operation accomplishment functions can be received (that is, functions for causing the operation figures 44 associated with the single-operation accomplishment functions to be displayed on the display screen 41) are also classified into the single-operation accomplishment functions. Such functions serve as a trigger for establishing a state in which input for other single-operation accomplishment functions can be received. Thus, it can be considered that such functions are accomplished by performing only a single select operation on the associated operation figure 44. For example, performing only a single select operation on the operation figure 44 associated with the audio setting function, among the functions described above, immediately establishes a state in which input for the audio device volume change function (one type of the single-operation accomplishment functions) can be received. Thus, the audio setting function is classified into the single-operation accomplishment functions. In addition, performing only a single select operation on the operation figure 44 associated with the air conditioner setting function immediately establishes a state in which input for the air conditioner device set temperature change function (one type of the single-operation accomplishment functions) can be received. Thus, the air conditioner setting function is classified into the single-operation accomplishment functions.

On the other hand, the destination search function, among the functions described above, requires a select operation for the associated operation figure 44, thereafter requires a select operation for search conditions such as a telephone number or an address, for example, and further requires an input operation for a search keyword corresponding to the set search conditions. That is, the destination search function is not accomplished before a plurality of select operations are performed, and thus classified into the multiple-operation accomplishment functions. Functions for establishing a state in which input for such multiple-operation accomplishment functions can be received are also classified into the multiple-operation accomplishment functions. In the example, the classification of each of the functions is stored in advance in a storage unit such as a memory in the form of a table or the like.

The particular operation figure determination section 61 determines the operation figure 44 associated with the single-operation accomplishment function as the particular operation figure 44S. That is, the particular operation figure determination section 61 determines the operation figure 44 associated with the single-operation accomplishment function which is accomplished through only a single select operation as the particular operation figure 44S. On the other hand, the particular operation figure determination section 61 determines the operation figure 44 associated with a function other than the single-operation accomplishment functions (that is, the multiple-operation accomplishment function) as a non-particular operation figure 44N. That is, the particular operation figure determination section 61 determines the operation figure 44 associated with the multiple-operation accomplishment function which is not accomplished before a plurality of select operations are performed as the non-particular operation figure 44N. The particular operation figure determination section 61 outputs information on the determination results to the protrusion control section 52 (status determination section 51) and the depiction control section 54.

In the example shown in FIG. 6, two images of information presentation figures 47 are displayed separately at both end portions in an information presentation region R2 set on the upper side on the display screen 41, and superimposed on the map image of the area around the vehicle position. The information presentation figure 47 is a figure displayed on the display screen 41 to present various information to the user. The information presentation figure 47 merely presents various information, and is not subjected to a select operation or the like, unlike the operation figures 44. In the example of FIG. 6, by way of example, a figure representing the reception state of radio waves of a cellular network or a wireless communication network is displayed at the left end portion, and a figure representing the current time (current date and time) is displayed at the right end portion. Other examples of such an information presentation figure 47 include a figure representing the reception state of radio waves from GPS satellites and a figure representing the address of the current location. In the embodiment, the particular operation figure determination section 61 treats the information presentation figure 47 in the same manner as the non-particular operation figure 44N.

The status determination section 51 determines a protrusion status representing the state of protrusion of each of the protrusion members 20 on the basis of the results of the determination performed by the particular operation figure determination section 61. In the embodiment, the protrusion status includes the "protruded state" and the "retracted state". The "retracted state" as one type of the protrusion status is a state in which the protrusion member 20 is at the minimally displaced position within its movable range in the protrusion direction Z (with the distal end portion of the pin member 21 flush with the level of the operation surface 11a). The "protruded state" as the other type of the protrusion status is a state in which the protrusion member 20 is at the maximally displaced position within its movable range in the protrusion direction Z. In the embodiment, the status determination section 51 determines which one of the protruded state and the retracted state each of the protrusion members 20 is to be brought into.

The status determination section 51 correlates the coordinates of the display screen 41 and the coordinates of the operation surface 11a, and determines that the protrusion status of one or more protrusion members 20 positioned at the coordinates on the operation surface 11a corresponding to the coordinates on the display screen 41 of the particular operation figure 44S is the protruded state. In the embodiment, the status determination section 51 determines that the protrusion status of each of a pair of (two) protrusion members 20 arranged in the Y direction for one particular operation figure 44S is the protruded state. On the other hand, the status determination section 51 determines that the protrusion status of one or more protrusion members 20 positioned at the coordinates on the operation surface 11a corresponding to the coordinates on the display screen 41 of the non-particular operation figure 44N and the information presentation figure 47 is the retracted state. In addition, the status determination section 51 also determines that the protrusion status of the protrusion members 20 positioned at the coordinates on the operation surface 11a corresponding to the coordinates on the display screen 41 of a region in which no operation figure 44 or information presentation figure 47 is displayed is the retracted state. In the example of FIG. 6, it is determined that the protrusion status of four pairs of (eight) protrusion members 20 corresponding to the four particular operation figures 44S associated with the probe traffic information display function, the vehicle position display function, the audio setting function, and the air conditioner setting function is the protruded state. In addition, it is determined that the protrusion status of a pair of (two) protrusion members 20 corresponding to the non-particular operation figure 44N associated with the destination search function is the retracted state. Moreover, it is determined that the protrusion status of two pairs of (four) protrusion members 20 corresponding to the two information presentation figures 47, namely the reception state display figure and the current time display figure, is the retracted state. Further, it is determined that the protrusion status of the other protrusion members 20 is the retracted state.

In the case where the image displayed on the display screen 41 is changed, in addition, the status determination section 51 determines a difference between the protrusion status corresponding to the image before the change and the protrusion status corresponding to the image after the change for each of the protrusion members 20. The status determination section 51 determines which one of "not changed", "transitioned to the protruded state", and "transitioned to the retracted state" is applied to each of the protrusion members 20. In the case where the operation figure 44 associated with the audio setting function is selected in FIG. 6, switching is made to a screen including images of two operation figures 44 for volume adjustment (each of which is one type of the particular operation figures 44S) as shown by way of example in FIG. 7. In this case, among the five operation figures 44 displayed side by side, two at both ends and one at the center disappear, and the remaining two are maintained on display although the images are changed.

In relation to the classification of the operation figures 44, the two particular operation figures 44S at both ends disappear, the one non-particular operation figure 44N at the center disappears, and the remaining two particular operation figures 44S are maintained on display although the types of the particular operation figures 44 are changed. Thus, in such a case, by way of example, the status determination section 51 determines that the protrusion status of each pair of (every two) protrusion members 20 arranged in the Y direction is "transitioned to the retracted state", "not changed (maintained in the protruded state)", "not changed (maintained in the retracted state)", "not changed (maintained in the protruded state)", and "transitioned to the retracted state", sequentially in this order along the Y direction.

The status determination section 51 outputs information on the protrusion status, or the difference in protrusion status, determined for each of the protrusion members 20 to the protrusion control section 52.

The protrusion control section 52 controls the position of the protrusion member 20 with respect to the operation surface 11a in the protrusion direction (which coincides with the protrusion direction Z). The protrusion control section 52 controls the drive mechanism 30 on the basis of the information received from the status determination section 51. In the embodiment, the protrusion control section 52 vibrates the piezoelectric element 31 by applying a pulsed voltage. The protrusion control section 52 is configured to adjust the magnitude relationship between the speed of vibration to one side along the protrusion direction Z and the speed of vibration to the other side. Such a configuration may be achieved by changing the duty ratio in accordance with the direction of vibration of the piezoelectric element 31. The protrusion control section 52 moves the protrusion member 20 to the protrusion direction side by making the speed of vibration to the protrusion direction side lower than the speed of vibration to the retraction direction side. On the other hand, the protrusion control section 52 moves the protrusion member 20 to the retraction direction side by making the speed of vibration to the retraction direction side lower than the speed of vibration to the protrusion direction side.

As discussed above, the results of the determination performed by the status determination section 51 are based on the results of the determination performed by the particular operation figure determination section 61. That is, the results of the determination performed by the status determination section 51 are based on whether or not the particular operation figure 44S is displayed at a predetermined position on the display screen 41. Therefore, by controlling the drive mechanism 30 on the basis of the determination results, the protrusion control section 52 brings the protrusion member 20 positioned at the coordinates on the operation surface 11a corresponding to the coordinates of the particular operation figure 44S into the protruded state in the case where the particular operation figure 44S is displayed on the display screen 41 (see FIGS. 6 and 7). In the embodiment, a pair of (two) protrusion members 20 are brought into the protruded state for one particular operation figure 44S. That is, the protrusion control section 52 expresses each particular operation figure 44S in the form of two protrusion portions arranged side by side in the Y direction of the operation surface 11a.

In addition, the protrusion control section 52 brings the protrusion members 20 positioned at the coordinates on the operation surface 11a corresponding to the coordinates on the display screen 41 of the non-particular operation figure 44N and the information presentation figure 47 into the retracted state (see FIGS. 6 and 7). Further, the protrusion control section 52 also brings the protrusion members 20 positioned at the coordinates on the operation surface 11a corresponding to the coordinates on the display screen 41 of a region in which no operation figure 44 or information presentation figure 47 is displayed into the retracted state. In this way, the protrusion control section 52 brings only the protrusion members 20 corresponding to the particular operation figure 44S displayed on the display screen 41 into the protruded state. In the case where the results of the determination performed by the status determination section 51 is obtained as the difference in protrusion status, the protrusion control section 52 maintains each of the protrusion members 20 in the protruded state or the retracted state, or switches each of the protrusion members 20 between the protruded state and the retracted state, on the basis of the determination results.

The protrusion control section 52 vibrates the piezoelectric element 31 for a predetermined time longer than the time required to switch the protrusion member 20 between the protruded state and the retracted state, and thereafter stops the vibration. That is, a voltage is applied to the piezoelectric element 31 only for the predetermined time, and thereafter application of the voltage is stopped. Even after application of the voltage is stopped, the protrusion member 20 maintains its position in the protrusion direction Z through static friction between the coupling member 33 and the tubular member 22.

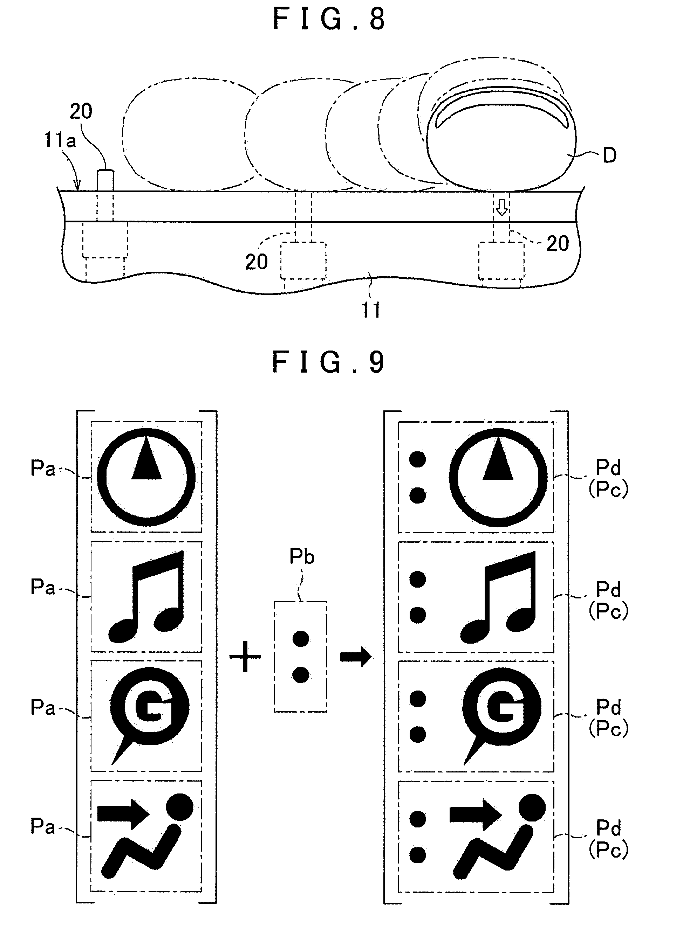

In the embodiment, the protrusion height of the protrusion member 20 which is brought into the protruded state (height of the distal end portion of the protrusion member 20 with reference to the operation surface 11a) is set to be relatively small. In the case where the object to be sensed D is a fingertip of the user as shown in FIG. 8, for example, the protrusion height may be so small that the difference in height can be absorbed by the flexibility of the ball of a finger intrinsic to a living body when the user slides his/her finger along the operation surface 11a. For example, the protrusion height may be equal to or less than 20% of the thickness of a fingertip. As a matter of course, the protrusion height may be more than that.

The position sensing section 53 acquires a sensed position of the object to be sensed D on the operation surface 11a of the touch pad 10. The position sensing section 53 specifies the position of an electrode most approached by the object to be sensed D on the basis of variations in capacitance of the electrodes caused when the object to be sensed D such as a fingertip is brought into contact with or into proximity to the operation surface 11a. Then, the position sensing section 53 acquires the specified position of the electrode as the sensed position on the operation surface 11a. The touch pad 10 may receive input corresponding to the sensed position on the operation surface 11a through such a function of the position sensing section 53. The position sensing section 53 outputs information on the acquired sensed position to the depiction control section 54 and the select operation determination section 55.

The depiction control section 54 controls depiction of an image to be displayed on the display screen 41. The depiction control section 54 generates a plurality of layers containing images of a background, roads, names of places, etc. around the vehicle position. In addition, the depiction control section 54 generates a layer containing an image of a vehicle position mark representing the vehicle position, and a layer containing an image of a route for guidance to a destination in the case where such a destination is set. Further, the depiction control section 54 generates a layer containing images of the predetermined operation figures 44 and information presentation figures 47, and a layer containing an image of the predetermined operation cursor 45. Then, the depiction control section 54 superimposes the generated layers to generate a single display image, and causes the display screen 41 to display the generated image.

The depiction control section 54 causes the main operation figures 44 to be displayed in the operation figure display region R1 set on the display screen 41 (see FIG. 6). In addition, the depiction control section 54 causes the main information presentation figures 47 to be displayed in the information presentation region R2 set on the display screen 41. The types of the operation figures 44 and the information presentation figures 47 to be displayed may differ depending on a request from the user, the running state of the vehicle, or the like. The depiction control section 54 appropriately displays and hides the various types of the operation figures 44 and the information presentation figures 47 depending on the situation.

In the embodiment, further, the depiction control section 54 displays a protrusion-time image Pc as the image of the particular operation figure 44S corresponding to the protrusion members 20 brought into the protruded state (see FIGS. 6 and 7) on the basis of the results of the determination performed by the particular operation figure determination section 61 and the results of drive control performed on the predetermined protrusion members 20 by the protrusion control section 52. The protrusion-time image Pc is an image indicating that the corresponding protrusion members 20 are brought into the protruded state. In the embodiment, the protrusion-time image Pc is a symbol-added image Pd obtained by adding a predetermined identification symbol image Pb to a normal-time image Pa as shown in FIG. 9. In the embodiment, the normal-time image Pa is an image of the operation figure 44 for an occasion where the corresponding protrusion members 20 are in the retracted state. The normal-time image Pa has a design that allows the user to intuitively recognize the content of a function associated with the corresponding operation figure 44. By way of example, the normal-time image Pa for the particular operation figure 44S associated with the vehicle position display function shown in the uppermost row in FIG. 9 has a design similar to the vehicle position mark. As another example, the normal-time image Pa for the particular operation figure 44S associated with the audio setting function shown in the second row has a design representing double eighth notes as a design related to music. The normal-time images Pa for the particular operation figures 44S associated with other functions also have a design related to the corresponding function.

The identification symbol image Pb is an image showing a symbol that enables identification of the protrusion members 20 brought into the protruded state. The identification symbol image Pb is a common image irrelevant to the content of the particular operation figure 44S. In the embodiment, the identification symbol image Pb has a design that allows the user to intuitively recognize the arrangement of the protrusion members 20 brought into the protruded state. In the embodiment, as shown in FIGS. 6, 7, and 9, the design of the identification symbol image Pb corresponds to the arrangement pattern on the operation surface 11a of a pair of (two) protrusion members 20 to be brought into the protruded state in correspondence with one particular operation figure 44S. In the example, the design of the identification symbol image Pb includes a pair of (two) small dots arranged side by side in the up-down direction in correspondence with the fact that two protrusion members corresponding to one particular operation figure 44S are arranged along the Y direction of the operation surface 11a.

The depiction control section 54 displays the normal-time image Pa for each of the particular operation figures 44S and the identification symbol image Pb provided adjacent to the normal-time image Pa as the image of the particular operation figure 44S displayed on the display screen 41. That is, the depiction control section 54 displays the normal-time image Pa for the particular operation figure 44S and further displays the identification symbol image Pb adjacently on the left side with respect to the normal-time image Pa to display the symbol-added image Pd (protrusion-time image Pc). The depiction control section 54 thus displays the symbol-added image Pd (protrusion-time image Pc) which is different from the normal-time image Pa as the image of the particular operation figure 44S.

On the other hand, the depiction control section 54 displays, as the image of the non-particular operation figure 44N displayed on the display screen 41, the same image at all times irrespective of whether or not other protrusion members 20 (in particular, those corresponding to the particular operation figure 44S) are brought into the protruded state. The depiction control section 54 displays the corresponding normal-time image Pa at all times as the image of the non-particular operation figure 44N. That is, the depiction control section 54 displays only the normal-time image Pa, and not the identification symbol image Pb, for each of the non-particular operation figures 44N.

In addition, the depiction control section 54 appropriately displays and hides the operation cursor 45 in accordance with a request from the user. In the embodiment, in the case where the position sensing section 53 does not sense contact of the object to be sensed D with or proximity of the object to be sensed D to the operation surface 11a, the depiction control section 54 hides the operation cursor 45. In the case where the position sensing section 53 senses contact of the object to be sensed D with or proximity of the object to be sensed D to the operation surface 11a, on the other hand, the depiction control section 54 displays the operation cursor 45, which has a circular shape in the example, at a position on the display screen 41 corresponding to the sensed position on the operation surface 11a. In the example, the operation cursor 45 is displayed such that the sensed position and the center position of the operation cursor 45 coincide with each other. In the case where the object to be sensed D in contact with or in proximity to the operation surface 11a is slid and the sensed position is also slid, the operation cursor 45 being displayed is also moved on the display screen 41 synchronously.

The select operation determination section 55 determines whether or not a select operation is performed for the operation figure 44 displayed on the display screen 41. The select operation determination section 55 determines whether or not a select operation is performed for the operation figure 44 on the basis of a predetermined operation performed on the operation surface 11a. In addition, in the case where the predetermined operation is sensed in a predetermined region including the position of the protrusion members 20 in the protruded state also on the basis of the position of the protrusion members 20, the select operation determination section 55 determines that a select operation for the operation figure 44 corresponding to the protrusion members 20 has been performed.

In the embodiment, two protrusion members 20 are assigned to one operation figure 44, and the pair of (two) protrusion members 20 have the same protrusion status at all times. Thus, one operation figure assignment region I (see FIG. 4) containing the positions of the pair of (two) protrusion members 20 is set as the "predetermined region" for the pair of (two) protrusion members 20. It should be noted, however, that adjacent operation figure assignment regions I are set so as not to overlap each other. Examples of the "predetermined operation" for determination include an operation of bringing the object to be sensed D, which has not been in contact with the operation surface 11a, into contact with the operation surface 11a (touch operation), an operation of temporarily moving the object to be sensed D, which has been in contact with the operation surface 11a, away from the operation surface 11a and thereafter bringing the object to be sensed D into contact with the operation surface 11a again (tap operation), and an operation of performing two tap operations within a predetermined time (double-tap operation).

In the embodiment, the coordinates of the display screen 41 and the coordinates of the operation surface 11a are correlated with each other as discussed above, and only the protrusion members 20 corresponding to the particular operation figure 44S displayed on the display screen 41 are brought into the protruded state. When the protrusion members 20 are in the retracted state, a portion of the operation surface 11a around the protrusion members 20 is flat. When the protrusion members 20 are in the protruded state, in contrast, the distal end portions of the protrusion members 20 are distinctly protruded from the operation surface 11a to allow the user to directly recognize the difference in height through tactile sensation using a fingertip or the like. In addition, the user may easily associate the position of the protrusion member 20 on the operation surface 11a recognized through tactile sensation and the position of the operation figure 44 displayed on the display screen 41 with each other through comparison performed in his/her mind. The user may further perform a touch operation or the like at a desired position on the operation surface 11a in reliance on the protrusion member 20 recognized through tactile sensation at that position. This allows the user to easily select the desired particular operation figure 44S without seeing the touch pad 10 provided close to the hand of the user as a matter of course, or even with hardly seeing the display input device 40 provided at a position close to the viewing direction during drive. Thus, the operation input device 4 and the operation input system 3 according to the embodiment allow to perform reliable operation input compared to the related art without closely watching the display screen 41.

As the protrusion members 20 corresponding to the particular operation figure 44S are brought into the protruded state, the image of the particular operation figure 44S is displayed as the symbol-added image Pd (protrusion-time image Pc). Hence, it is possible to distinguish between the particular operation figure 44S and the other figures (the non-particular operation figure 44N and the information presentation figure 47) on the display screen 41 on the basis of whether or not each operation figure 44 is displayed as the symbol-added image Pd. That is, it is possible to intuitively distinguish between the particular operation figure 44S and the other figures at a glance without closely watching the display screen 41. Thus, the user can perform operation input in a highly convenient manner.

In the embodiment, only the protrusion members 20 corresponding to the particular operation figure 44S associated with the single-operation accomplishment function, which is accomplished through only a single select operation, are brought into the protruded state, and the protrusion members 20 corresponding to the non-particular operation figure 44N associated with the multiple-operation accomplishment function, which is not accomplished before a plurality of select operations are performed, are brought into the retracted state. In a scene where the user (in particular, the driver of the vehicle) performs operation input to the navigation apparatus 1 in between driving, for example, it is occasionally difficult to perform successive complicated operations. Therefore, it is considered to be more probable that an operation is to be performed on the particular operation figure 44S than on the non-particular operation figure 44N. Thus, by bringing only the protrusion members 20 corresponding to the particular operation figure 44S into the protruded state as described above, the effectiveness of operation input performed in a highly convenient manner is secured also in consideration of the probability that an operation is to be performed on each operation figure 44 when operation input is performed without closely watching the display screen 41.

In the embodiment, the protrusion members 20 corresponding to the non-particular operation figure 44N associated with the multiple-operation accomplishment function are brought into the retracted state. Thus, the position, on the operation surface 11a, of the operation figure assignment region I corresponding to the non-particular operation figure 44N can be made relatively less easy to find. Hence, it can be made relatively difficult to perform a select operation for the non-particular operation figure 44N, and to perform successive complicated operations in between driving. This also contributes to safe driving.

In the embodiment, in addition, each particular operation figure 44S displayed on the display screen 41 is expressed by a pair of (two) protrusion members 20 in the form of two protrusion portions arranged side by side. Therefore, the user may easily grasp the position of the operation figure assignment region I on the operation surface 11a by recognizing the two points at the same location through tactile sensation.

In the case where it is determined that a select operation for the operation figure 44 has been performed, the select operation determination section 55 outputs information representing the select operation to the navigation computation section 70 etc. to achieve a function associated with the selected operation figure 44. The select operation determination section 55 also outputs the information to the protrusion control section 52 (status determination section 51) and the depiction control section 54. Thus, in the case where the image to be displayed on the display screen 41 is changed in accordance with the function to be achieved next, the display image is updated, and the difference in protrusion status of each protrusion member 20 is determined accordingly.

The state sensing section 56 senses the protruded state and the retracted state of the protrusion members 20. The state sensing section 56 is configured to acquire information from a position sensor (not shown), for example. The state sensing section 56 senses whether the actual protrusion status of each protrusion member 20 is the protruded state or the retracted state on the basis of the acquired information on the position of the protrusion member 20 in the protrusion direction Z. The state sensing section 56 outputs information on the sensing results to the input reception section 57 of the select operation determination section 55.

In the case where the state sensing section 56 senses that the protrusion member 20 has been changed from the protruded state to the retracted state, the input reception section 57 receives input to the protrusion member 20. In the embodiment, as described above, the protrusion members 20 corresponding to the particular operation figure 44S displayed on the display screen 41 have been brought into the protruded state. Therefore, receiving input to the protrusion member 20 is equivalent to receiving input to the particular operation figure 44S corresponding to the protrusion member 20. That is, in the case where it is sensed that the protrusion member 20 has been changed from the protruded state to the retracted state, the input reception section 57 receives input to the particular operation figure 44S corresponding to the protrusion member 20. The select operation determination section 55 determines on the basis of the received input that a select operation has been performed for the particular operation figure 44S corresponding to the protrusion member 20.

In the embodiment, in which the thus configured input reception section 57 is provided, a select operation for the particular operation figure 44S may be received via the protrusion member 20, besides a normal select operation received on the basis of a touch operation or the like performed on the touch pad 10. In this event, the user may select the desired particular operation figure 44S just by recognizing through tactile sensation a target protrusion member 20 in the protruded state through a slide operation performed on the operation surface 11a using the object to be sensed D such as a fingertip and thereafter depressing the protrusion member 20 into the retracted state as shown in FIG. 8. That is, the user may select the particular operation figure 44S through an intuitive operation of taking the protrusion member 20 in the protruded state as a button and depressing the simulated button. Thus, the operation input device 4 and the operation input system 3 according to the embodiment allow to perform operation input in a highly convenient manner also in this point.

### 4. Process Procedures of Operation Input Reception Process

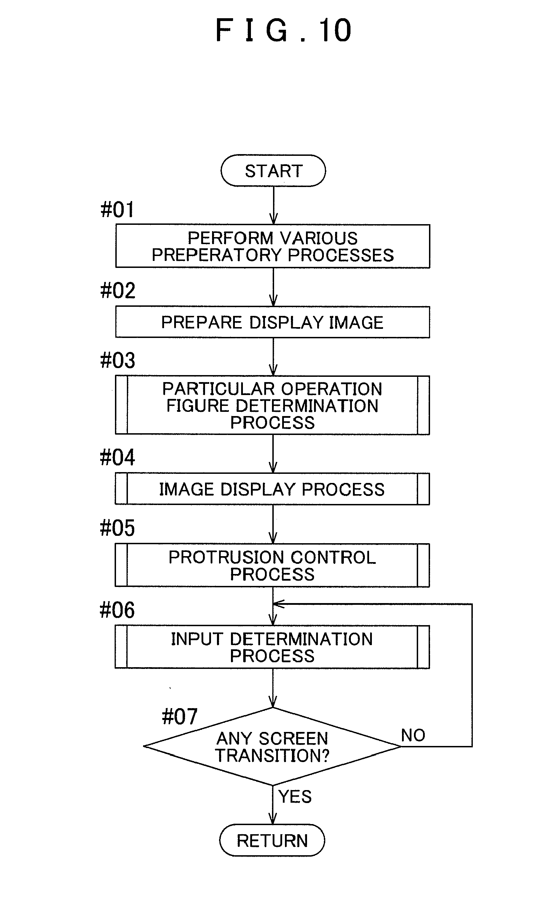

The process procedures of the operation input reception process performed by the operation input system 3 according to the embodiment will be described with reference to FIGS. 10 to 14. The procedures of the operation input reception process described below are executed by hardware or software (a program) implementing the functional sections of the operation input computation section 50, or a combination of both. In the case where the functional sections are implemented by a program, the arithmetic processing unit provided in the control computation section 6 including the operation input computation section 50 operates as a computer that executes the program implementing the functional sections.

In the operation input reception process, as shown in FIG. 10, first, various preparatory processes are executed (step #01). Examples of the preparatory processes include preparing a work area for preparing a display image. Next, a display image is actually prepared (step #02). Next, a particular operation figure determination process is executed (step #03).

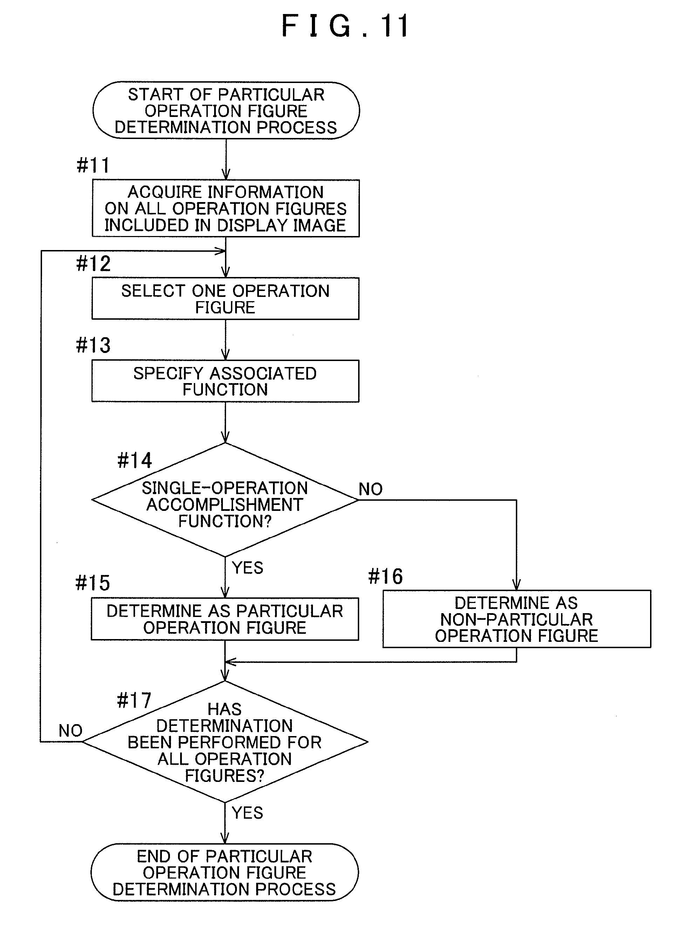

In the particular operation figure determination process, as shown in FIG. 11, information on all the operation figures 44 included in the display image prepared in step #02 is acquired (step #11). In the example, information on all the information presentation figures 47 included in the display image is also acquired. In the following description, for ease of description, the information presentation figures 47 are included in the operation figures 44. One operation figure 44 is selected from the plurality of operation figures 44 (step #12). The function associated with the selected operation figure 44 is specified (step #13). It is determined whether or not the specified function is a single-operation accomplishment function (step #14). In the case where it is determined that the specified function is a single-operation accomplishment function (step #14: Yes), it is determined that the selected operation figure 44 is a particular operation figure 44S (step #15). In the case where it is determined that the specified function is not a single-operation accomplishment function, that is, the specified function is a multiple-operation accomplishment function or the selected figure merely functions to present information (step #14: No), it is determined that the selected operation figure 44 is a non-particular operation figure 44N (or an information presentation figure 47) (step #16). Information on the results of the determination performed in the particular operation figure determination process is set in the form of whether a particular operation figure determination flag is ON or OFF, for example. When the processes in step #12 to step #16 are completed for all the operation figures 44 (step #17: Yes), the particular operation figure determination process is terminated.

When the particular operation figure determination process is terminated, the process returns to FIG. 10. Next, an image display process is executed (step #04).

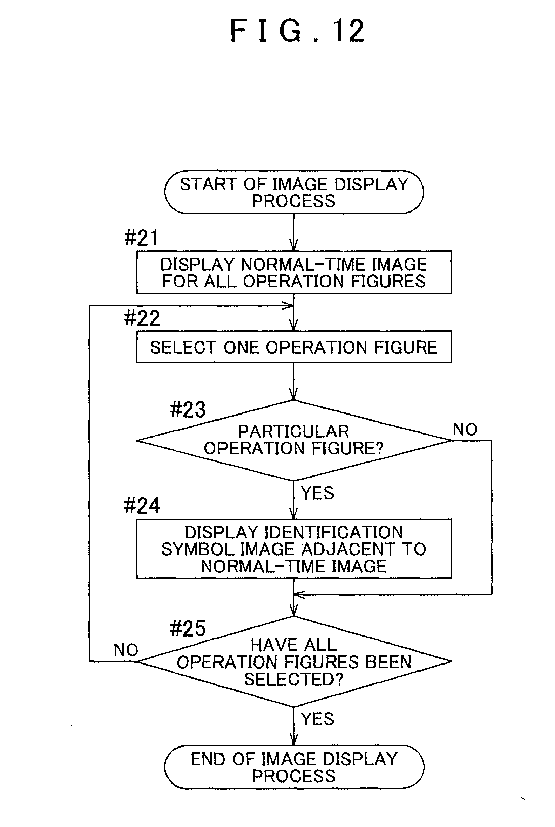

In the image display process, as shown in FIG. 12, a normal-time image Pa is displayed for all the operation figures 44, irrespective of whether the operation figure 44 is a particular operation figure 44S or a non-particular operation figure 44N (step #21). The normal-time image Pa is the same as the image included in the display image prepared in step #02. Thus, in step #21, the image included in the display image prepared in step #02 is displayed as it is. Next, one operation figure 44 is selected from all the operation figures 44 included in the display image (step #22). It is determined whether or not the selected operation figure 44 is a particular operation figure 44S (step #23). Only in the case where the selected operation figure 44 is a particular operation figure 44S (step #23: Yes), an identification symbol image Pb is displayed adjacent to the normal-time image Pa for the particular operation figure 44S (step #24). This allows the particular operation figure 44S to be represented by a symbol-added image Pd (protrusion-time image Pc). In the case where the selected operation figure 44 is a non-particular operation figure 44N (step #23: No), no process is performed. That is, the non-particular operation figure 44N remains being represented by the normal-time image Pa. When the processes in step #22 to step #24 are completed for all the operation figures 44 (step #25: Yes), the image display process is terminated.

When the image display process is terminated, the process returns to FIG. 10. Next, a protrusion control process is executed (step #05).

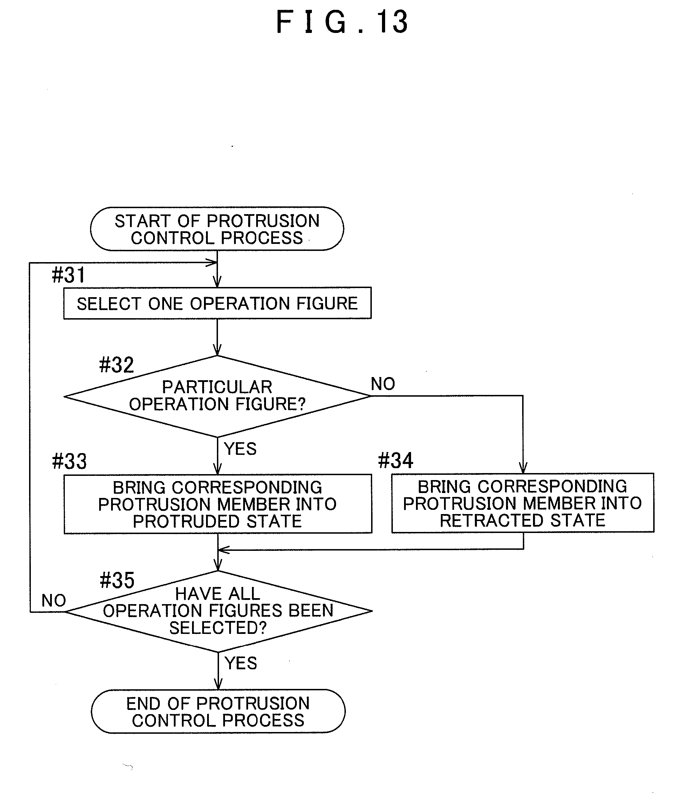

In the protrusion control process, as shown in FIG. 13, one operation figure 44 is selected from all the operation figures 44 included in the display image (step #31). It is determined whether or not the selected operation figure 44 is a particular operation figure 44S (step #32). In the case where the selected operation figure 44 is a particular operation figure 44S (step #32: Yes), a pair of (two) protrusion members 20 corresponding to the particular operation figure 44S are brought into the protruded state (step #33). In the case where the selected operation figure 44 is a non-particular operation figure 44N (step #32: No), a pair of (two) protrusion members 20 corresponding to the non-particular operation figure 44N are brought into the retracted state (step #34). When the processes in step #31 to step #34 are completed for all the operation figures 44 (step #35: Yes), the protrusion control process is terminated.

When the protrusion control process is terminated, the process returns to FIG. 10. Next, an input determination process is executed (step #06).

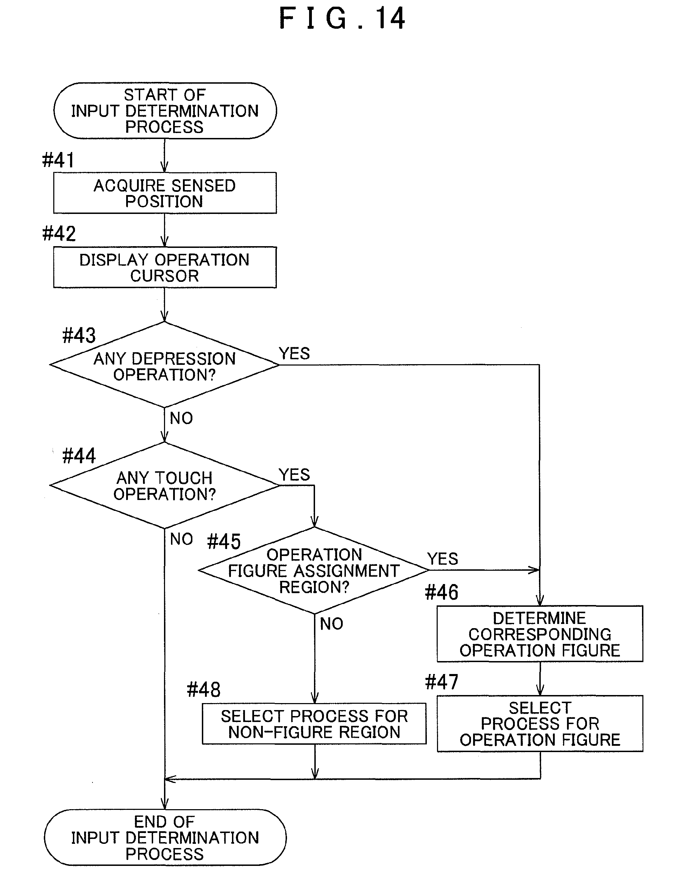

In the input determination process, as shown in FIG. 14, a sensed position of the object to be sensed D on the operation surface 11a is acquired (step #41). The operation cursor 45 is displayed at a position on the display screen 41 corresponding to the acquired sensed position (step #42). In the case where the sensed position of the object to be sensed D is moved on the operation surface 11a, the operation cursor 45 being displayed is also moved on the display screen 41 accordingly. After that, it is determined whether or not an operation (depression operation) is performed to depress the protrusion member 20 which has been in the protruded state toward the operation surface 11a (step #43). In the case where it is determined that such a depression operation is not performed (step #43: No), it is determined whether or not a touch operation (including a tap operation and a double-tap operation) is performed on the operation surface 11a (step #44). In the case where it is determined that such a touch operation is not performed (step #44: No), the input determination process is terminated.

In the case where a touch operation is sensed in step #44 (step #44: Yes), it is determined whether or not the position at which the touch operation is sensed falls within the operation figure assignment region I (step #45). In the case where it is determined that the sensed position falls within the operation figure assignment region I (step #45: Yes) or in the case where it is determined in step #43 that a depression operation for the protrusion member 20 has been sensed (step #43: Yes), the type of the operation figure 44 corresponding to the operation figure assignment region I or the protrusion member 20 which has been subjected to the depression operation is determined (step #46). Then, the operation figure 44 is selected, and the function associated with the operation figure 44 (such as a destination search function or an audio setting function, for example) is achieved (step #47). After that, the input determination process is terminated. In the case where it is determined in step #45 that the sensed position does not fall within the operation figure assignment region I (step #45: No), a selection process is executed for a region (non-figure region) other than the operation figure assignment region I (step #48). For example, a process for scrolling a map image such that the position at which the touch operation is sensed is centered in the display screen 41 is executed. The input determination process is thus terminated.

When the input determination process is terminated, the process returns to FIG. 10, and it is determined whether or not the image displayed on the display screen 41 is changed (step #07). In the case where no depression operation or touch operation is sensed in the input determination process, a screen transition is not likely to be performed. In such a case (step #07: No), the input determination process is executed again. In the case where the operation figure 44 is selected as a result of the input determination process, a process for scrolling the map image is executed, or the like, meanwhile, a screen transition may be performed. In such a case (step #07: Yes), the operation input reception process is terminated. The processes in step #01 and the subsequent steps are executed again on the display image after the change. The processes described above are repeatedly successively executed.

### 5. Other Embodiments

Lastly, operation input systems according to other embodiments of the present invention will be described. A configuration disclosed in each of the following embodiments may be applied in combination with a configuration disclosed in any other embodiment unless any contradiction occurs.

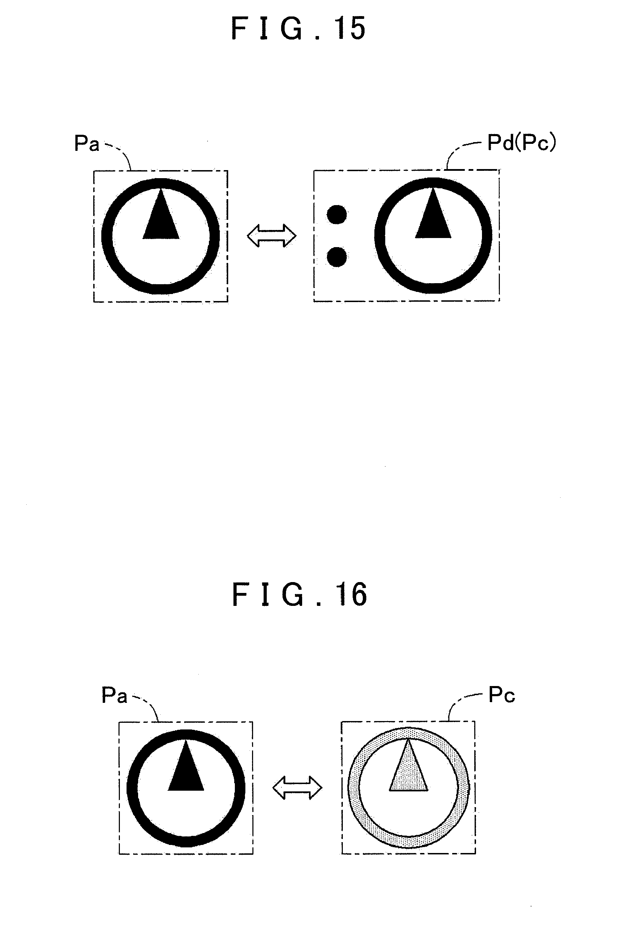

(1) In the embodiment described above, the depiction control section 54 displays the normal-time image Pa for each of the particular operation figures 44S and the identification symbol image Pb provided adjacent to the normal-time image Pa as the image of the particular operation figure 44S displayed on the display screen 41. However, embodiments of the present invention are not limited thereto. That is, as conceptually shown in FIG. 15, the depiction control section 54 may display the symbol-added image Pd stored in advance in substitution for the normal-time image Pa for each of the particular operation figures 44S. This also allows the particular operation figure 44S to be appropriately represented by the protrusion-time image Pc. In this case, the process in step #24 in the flowchart of FIG. 12 may be replaced with "substitute symbol-added image Pd (protrusion-time image Pc) for normal-time image Pa". Alternatively, the process in step #21 may be omitted, and the symbol-added image Pd (protrusion-time image Pc) may be displayed in the case where the selected operation figure 44 is a particular operation figure 44S (step #23: Yes), and the normal-time image Pa may be displayed in the case where the selected operation figure 44 is a non-particular operation II (step #23: No).

(2) In the embodiment described above, two protrusion members 20 corresponding to one particular operation figure 44S are arranged along the Y direction of the operation surface 11a. In addition, the design of the identification symbol image Pb includes a pair of (two) small dots arranged side by side in the up-down direction in correspondence with the arrangement of the two protrusion members 20. However, embodiments of the present invention are not limited thereto. That is, the number of protrusion members 20 to be brought into the protruded state in correspondence with one particular operation figure 44S may be determined as desired, and the arrangement of the one or more protrusion members 20 on the operation surface 11a may also be determined as desired. For example, three or more protrusion members 20 may be arranged along the X direction or the Y direction of the operation surface 11a, or a plurality of protrusion members 20 may be arranged in a rectangular or circular frame shape or the like. In addition, the number and arrangement of the protrusion members 20 to be brought into the protruded state may be different among the particular operation figures 44S. Also in such cases, the design of the identification symbol image Pb preferably corresponds to the arrangement pattern on the operation surface 11a of the one or more protrusion members 20 to be brought into the protruded state in correspondence with one particular operation figure 44S.

(3) In the embodiment described above, the design of the identification symbol image Pb corresponds to the arrangement pattern on the operation surface 11a of the one or more protrusion members 20 to be brought into the protruded state in correspondence with one particular operation figure 44S. However, embodiments of the present invention are not limited thereto. The identification symbol image Pb may have any design as long as the protrusion members 20 brought into the protruded state can be visually discriminated on the display screen 41, and the design of the identification symbol image Pb may not correspond to the arrangement pattern of the protrusion members 20 to be brought into the protruded state.

(4) In the embodiment described above, the symbol-added image Pd serving as the protrusion-time image Pc is formed by the normal-time image Pa and the identification symbol image Pb displayed adjacently on the left side with respect to the normal-time image Pa. However, embodiments of the present invention are not limited thereto. That is, the position relationship between the normal-time image Pa and the identification symbol image Pb may be determined as desired, and the identification symbol image Pb may be displayed adjacently on the right side with respect to the normal-time image Pa. Alternatively, the identification symbol image Pb may be displayed adjacently on the upper side or the lower side with respect to the normal-time image Pa, depending on (or irrespective of) the arrangement pattern of the protrusion members 20 to be brought into the protruded state. Alternatively, the identification symbol image Pb may be displayed so as to surround at least a part of the periphery of the normal-time image Pa.

(5) In the embodiment described above, the protrusion-time image Pc is formed as the symbol-added image Pd obtained by adding the predetermined identification symbol image Pb to the normal-time image Pa. However, embodiments of the present invention are not limited thereto. That is, as conceptually shown in FIG. 16, the protrusion-time image Pc may be formed as an image obtained by changing the color of the normal-time image Pa, for example, without adding the identification symbol image Pb. Alternatively, the protrusion-time image Pc may also be an image with one or more of size, shape, brightness, and color changed from those of the normal-time image Pa by additionally using size, shape, and brightness as parameters for prescribing the form of an image.

(6) In the embodiment described above, the depiction control section 54 displays the same image (the normal-time image Pa for each of the non-particular operation figures 44N) at all times as the image of the non-particular operation figure 44N. However, embodiments of the present invention are not limited thereto. That is, the depiction control section 54 may be configured to display, as the image of the non-particular operation figure 44N, a retraction-time image indicating that the protrusion member 20 is brought into the retracted state, for example. In this case, the retraction-time image may be a second symbol-added image that is different from the symbol-added image Pd and that is obtained by adding a second identification symbol image that is different from the identification symbol image Pb to the normal-time image Pa determined in advance. A specific technique for displaying the retracted-time image includes displaying the normal-time image Pa for each of the non-particular operation figures 44N and the second identification symbol image provided adjacent to the normal-time image Pa, or displaying the second symbol-added image stored in advance in substitution for the normal-time image Pa for each of the non-particular operation figures 44N. The retracted-time image may also be an image that is different from those of the normal-time image Pa in one or more of size, shape, brightness, and color (and that is different from the protrusion-time image Pc).

(7) In the embodiment described above, the functions associated with the operation figures 44 are statically classified into the particular operation figures 44S and the non-particular operation figures 44N in accordance with the number of select operations required before the relevant function is accomplished. However, embodiments of the present invention are not limited thereto. That is, the functions may be dynamically classified on the basis of other criteria set in accordance with the running state of the vehicle or the like, for example.

(8) In the embodiment described above, in the case where a particular operation figure 44S is displayed on the display screen 41, the protrusion control section 52 brings the protrusion member 20 positioned at the coordinates on the operation surface 11a corresponding to the coordinates of the particular operation figure 44S into the protruded state. However, embodiments of the present invention are not limited thereto. That is, in the case where a plurality of particular operation figures 44S are displayed on the display screen 41, the protrusion control section 52 may bring the protrusion members 20 matching the positional relationship between the particular operation figures 44S on the display screen into the protruded state. That is, the protrusion control section 52 may bring a plurality of protrusion members 20 into the protruded state so as to establish a positional relationship corresponding to the mutual positional relationship between the coordinates of the plurality of particular operation figures 44S displayed on the display screen 41. In this case, a plurality of protrusion members 20 positioned at coordinates at the same position in the X direction but at different positions in the Y direction compared to the embodiment described above are brought into the protruded state for the plurality of particular operation figures 44S described in relation to the embodiment described above. The depiction control section 54 displays an image of the particular operation figure 44S corresponding to the protrusion members 20 to be brought into the protruded state as the protrusion-time image Pc.

(9) In the embodiment described above, the plurality of protrusion members 20 are arranged regularly at constant intervals in each of the vertical and horizontal directions over the entire operation surface 11a, and arranged in a matrix (orthogonal grid) as a whole. However, embodiments of the present invention are not limited thereto. That is, it is only necessary that the plurality of protrusion members 20 should be arranged at least in accordance with a predetermined rule along the operation surface 11a, and the plurality of protrusion members 20 may be arranged in a honeycomb structure (hexagonal grid) over the entire operation surface 11a.

(10) In the embodiment described above, the drive mechanism 30 includes the piezoelectric element 31. However, embodiments of the present invention are not limited thereto. That is, the drive mechanism 30 may have any specific configuration as long as the drive mechanism 30 can cause advancing/retracting operation of the protrusion member 20 along the protrusion direction Z to move the protrusion member 20 between the protruded state and the retracted state. For example, the drive mechanism 30 may utilize a fluid pressure such as a liquid pressure or a gas pressure, or may utilize an electromagnetic force of an electromagnet or the like.

(11) In the embodiment described above, the protrusion member 20 is driven so as to be advanced and retracted along the protrusion direction Z set to a direction orthogonally intersecting the operation surface 11a. However, embodiments of the present invention are not limited thereto. That is, the protrusion direction Z may be set to a direction inclined with respect to, rather than orthogonally intersecting, the operation surface 11a. In this case, in the case where the touch pad 10 is disposed generally horizontally at the center console portion as in the embodiment described above, for example, the protrusion direction Z is preferably set to be inclined toward a driver's seat.

(12) In the embodiment described above, the touch pad 10 of the capacitance type which can sense the object to be sensed D in contact with or in proximity to the operation surface 11a is used. However, embodiments of the present invention are not limited thereto. That is, the touch pad 10 of the resistance film type may also be utilized in place of the touch pad 10 of the capacitance type. Alternatively, the touch pad 10 of a pressure sensitive type which can sense the object to be sensed D in contact with the operation surface 11a may also be utilized.

(13) In the embodiment described above, the operation input device 4 is communicably connected to the display input device 40 formed by integrating a display device and an input device such as a touch panel. However, embodiments of the present invention are not limited thereto. That is, the presence of a touch panel is not essential, and it is only necessary that the operation input device 4 should be connected to a display device including at least a display screen.

(14) In the embodiment described above, the state sensing section 56 is configured to sense the actual protrusion status of each protrusion member 20 on the basis of information acquired from a position sensor. However, embodiments of the present invention are not limited thereto. For example, the state sensing section 56 may be formed using the piezoelectric element 31 provided in the drive mechanism 30 as a sensor element, by utilizing the characteristics of the piezoelectric element 31. As discussed above, when the protrusion control section 52 drives the protrusion member 20 so as to be advanced and retracted, application of a voltage is stopped after a predetermined time elapses. Therefore, providing a configuration that enables to sense an external force (a depressing force provided by the user) applied to the piezoelectric element 31 via the protrusion member 20 and the coupling member 33 as an electric signal after the stop of the voltage application may achieve a configuration that enables to sense an operation (depression operation) for the protrusion member 20 performed by the user. Then, the state sensing section 56 may sense the actual protrusion status of each protrusion member 20 on the basis of the sensed depression operation and the protrusion status of each protrusion member 20 determined by the status determination section 51. That is, in the case where an electric signal from the piezoelectric element 31 corresponding to the protrusion member 20 in the protruded state is sensed, the state sensing section 56 determines that the protrusion member 20 has been brought into the retracted state. Meanwhile, in the case where a lapse of the predetermined time is detected by a timer or the like after the piezoelectric element 31 corresponding to the protrusion member 20 in the retracted state is vibrated, the state sensing section 56 determines that the protrusion member 20 has been brought into the protruded state.

(15) In the embodiment described above, the operation input computation section 50 includes the functional sections 51 to 61. However, embodiments of the present invention are not limited thereto. That is, the assignment of the functional sections described in relation to the embodiment described above is merely illustrative, and a plurality of functional sections may be combined with each other, or a single functional section may be further divided into sub-sections.

(16) In the embodiment described above, the operation input system 3 allows to perform operation input to the in-vehicle navigation apparatus 1 (an example of navigation systems), all the components of which are mounted on the vehicle. However, embodiments of the present invention are not limited thereto. That is, the operation input system 3 according to the present invention may allow to perform operation input to a navigation system of a client/server type in which the components of the navigation apparatus 1 described in relation to the embodiment described above are distributed to a server device and an in-vehicle terminal device, a laptop personal computer, a gaming device, and other systems and devices such as control devices for various machines, for example.

(17) Also regarding other configurations, the embodiment disclosed herein is illustrative in all respects, and the present invention is not limited thereto. That is, the scope of the present invention is defined by the appended claims.

The present invention may be suitably applied to an operation input system including a touch pad serving as a pointing device.

## Claims

1. An operation input system (3) comprising:
a touch pad (10) that includes an operation plate, on a surface of which an operation surface (11a) is formed, and is configured to sense an object to be sensed (D) in contact with or in proximity to the operation surface (11a) to receive input corresponding to a position of the sensed object (D);
a protrusion member (20), a distal end portion of which can penetrate through the operation plate to protrude from the operation surface (11a);
a protrusion control section (52) that is configured to control a position of the protrusion member (20) with respect to the operation surface (11a) in a protrusion direction;
a display device (40) that includes a display screen (41) and is configured to display an image on the display screen (41); and
a depiction control section (54) that is configured to control depiction of the image to be displayed on the display screen (41), wherein:
the protrusion control section (52) is configured to correlate coordinates of the display screen (41) and coordinates of the operation surface (11a) with each other, and in the case where a particular operation figure (44), which is a particular one of a plurality of types of operation figures (44), is displayed on the display screen (41), the protrusion control section (52) is configured to bring the protrusion member (20) positioned at coordinates on the operation surface (11a) corresponding to coordinates of the particular operation figure (44) into a protruded state in which the protrusion member (22) protrudes from the operation surface (11a); and
the depiction control section (52) is configured to display, as an image of the particular operation figure (44) corresponding to the protrusion member (20) brought into the protruded state, a protrusion-time image (Pc) indicating that the protrusion member (20) is brought into the protruded state.

2. An operation input system (3) comprising:
a touch pad (10) that includes an operation plate, on a surface of which an operation surface (11a) is formed, and is configured to sense an object to be sensed (D) in contact with or in proximity to the operation surface (11a) to receive input corresponding to a position of the sensed object (D);
a plurality of protrusion members (20), distal end portions of which can penetrate through the operation plate to protrude from the operation surface (11a);
a protrusion control section (52) that is configured to control positions of the protrusion members (20) with respect to the operation surface (11a) in a protrusion direction;
a display device (40) that includes a display screen (41) and is configured to display an image on the display screen (41); and
a depiction control section (54) that is configured to control depiction of the image to be displayed on the display screen (41), wherein:
in the case where a plurality of particular operation figures (44), which are particular ones of a plurality of types of operation figures (44), are displayed on the display screen (41), the protrusion control section (52) is configured to bring the protrusion members (20) matching positional relationship between the particular operation figures (44) on the display screen (41) into a protruded state in which the protrusion member (20) protrudes from the operation surface (11a); and
the depiction control section (54) is configured to display, as images of the particular operation figures (44) corresponding to the protrusion members (20) brought into the protruded state, protrusion-time images (Pc) indicating that the protrusion members (20) are brought into the protruded state.

3. The operation input system (3) according to claim 1 or 2, wherein
the depiction control section (54) is configured to display, as images of non-particular operation figures which are operation figures (44) among the plurality of types of operation figures (44) other than the particular operation figures, the same image irrespective of whether or not the protrusion member or members (20) is/are brought into the protruded state.

4. The operation input system (3) according to any of claims 1 to 3, wherein:
the plurality of types of operation figures (44) is associated with respective predetermined functions; and
the operation input system (3) further includes a particular operation figure determination section (61) that is configured to determine the operation figures (44) associated with a function accomplished through a single select operation as the particular operation figures.

5. The operation input system (3) according to any of claims 1 to 4, wherein:
the protrusion-time image (Pc) is a symbol-added image (Pd) obtained by adding a predetermined identification symbol image (Pb) to a normal-time image (Pa) that is an image of the operation figure (44) for an occasion on which the protrusion member (20) is in a retracted state; and
the depiction control section (54) is configured to display the normal-time image (Pa) for each of the particular operation figures and the identification symbol image (Pb) provided adjacent to the normal-time image (Pa), or to display the symbol-added image (Pd) stored in advance in substitution for the normal-time image (Pa) for each of the particular operation figures.

6. The operation input system (3) according to claim 5, wherein
the identification symbol image (Pb) has a design corresponding to an arrangement pattern on the operation surface (11a) of one or more of the protrusion members (20) to be brought into the protruded state in correspondence with one of the particular operation figures.
